(19) Europäisches Patentamt
European Patent Office
Office européen des brevets

(11) **EP 1 865 004 A1**

(12) **EUROPEAN PATENT APPLICATION**

(43) Date of publication:
**12.12.2007 Bulletin 2007/50**

(51) Int Cl.:
*C08F 8/14* *(2006.01)*    *C08K 5/053* *(2006.01)*
*C08K 5/21* *(2006.01)*    *C08L 33/02* *(2006.01)*
*C08L 33/06* *(2006.01)*    *D04H 1/64* *(2006.01)*

(21) Application number: **07252237.8**

(22) Date of filing: **01.06.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **06.06.2006 US 811605 P**

(71) Applicant: **ROHM AND HAAS COMPANY
Philadelphia,
Pennsylvania 19106-2399 (US)**

(72) Inventor: **Weinstein, Barry
Dresher, Pennsylvania 19025 (US)**

(74) Representative: **Buckley, Guy Julian et al
Rohm and Haas (UK) Ltd.
European Patent Department
4th Floor, 22 Tudor Street
London EC4Y 0AY (GB)**

(54) **Curable composition**

(57)    A curable composition, useful as a thermosetting binder, having urea, a polycarboxy polymer or co-polymer and a polyol.

EP 1 865 004 A1

**Description**

This invention relates to a curable composition useful as a thermosetting binder for a variety of applications.

Curable compositions containing little or no formaldehyde are highly desirable in a variety of products, due to the health and environmental problems associated with formaldehyde. Existing commercial formaldehyde-free binders contain a carboxylic acid polymer and a polyol that esterify and form a thermoset when heat cured. Such binders are commonly sprayed onto the substrate, which means they should be of a reasonable viscosity to allow spray application. However, in some cases, efforts to achieve good viscosity compromise other properties, and may increase the cost of the binder. Low viscosity binders also are advantageous inasmuch as they allow the binder to flow across fibrous substrates and coat them well so that upon cure, fibers that contact each other will be bound together.

For example, U.S. Patent Publication No. 2002/0188055 discloses the use of a surfactant to reduce viscosity in formaldehyde-free binders. However, surfactant when present in the cured binder on a substrate tends to increase the moisture sensitivity of the substrate, as compared to a substrate coated with binder without surfactant.

This invention provides a formaldehyde-free thermosetting binder that has good viscosity for spray application that retains moisture resistance after cure.

This invention is a curable composition comprising at least one polyol; at least one polycarboxy polymer or copolymer; and urea in an amount from 5 to 25 % by weight of the total solids in the composition, where the ratio of equivalents of the carboxy groups in the polycarboxy polymer or copolymer to the hydroxy groups in the polyol is from 1.0/.01 to 1/3.

Preferably the composition of claim 1 contains 10-20% urea by weight of the total solids in the composition.

Preferably, the ratio of equivalents of the carboxy groups in the polycarboxy polymer or copolymer to the hydroxy groups in the polyol is from 1/0.02 to 1/1, more perferably from 1/.2 to 1/.8

The composition may further comprise an emulsion polymer.

Preferably. the polycarboxy polymer or copolymer has a weight average molecular weight of no greater than 10,000, more preferably no greater than 5,000, even more preferably no greater than 3,000

When we refer to "polymer or copolymer," we mean either or both of them in combination in a binder. In other words, we are referring to one or more homopolymers and one or more copolymers singly or in combination with one another. In this specification, we use the term (co)polymer to mean "polymer or copolymer" as we have defined the latter term.

"Polyol" means a polyhydric alcohol, i.e., one containing two or more hydroxyl groups. The preferred polyol is triethanolamine. However, other polyols can be used. The polyol preferably should be sufficiently nonvolatile that it will substantially remain available for reaction with the polyacid in the composition during heating and curing operations. The polyol may be a compound with a molecular weight less than about 1000 bearing at least two hydroxyl groups such as, for example, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, and certain reactive polyols such as, for example, .beta.-hydroxyalkylamides such as, for example, bis-[N,N-di(.beta.-hydroxyethyl)]adipamide, as may be prepared according to the teachings of U.S. Pat. No. 4,076,917, or it may be an addition polymer containing at least two hydroxyl groups such as, for example, polyvinyl alcohol, partially hydrolyzed polyvinyl acetate, and homopolymers or copolymers of hydroxyethyl (meth)acrylate, hydroxypropyl (meth)acrylate, and the like.

When we refer to polyol, we also refer to polymers that contain both hydroxy and multiple carboxy groups such as, for example in U.S. Patent Publication No. 2005/0038193. In this case, such a polymer is both a polyol and a polycarboxy (co)polymer, satisfying both of those elements of this invention.

The formaldehyde-free curable aqueous composition of this invention may also contain a phosphorous-containing cure accelerator which may be a compound with a molecular weight less than about 1000 such as, for example, an alkali metal hypophosphite salt, an alkali metal phosphite, an alkali metal polyphosphate, an alkali metal dihydrogen phosphate, a polyphosphoric acid, and an alkyl phosphinic acid or it may be an oligomer or polymer bearing phosphorous-containing groups such as, for example, addition polymers of acrylic and/or maleic acids formed in the presence of sodium hypophosphite, addition polymers prepared from ethylenically unsaturated monomers in the presence of phosphorous salt chain transfer agents or terminators, and addition polymers containing acid-functional monomer residues such as, for example, copolymerized phosphoethyl methacrylate, and like phosphonic acid esters, and copolymerized vinyl sulfonic acid monomers, and their salts.

In addition, if a phosphorous-containing chain transfer agent is used to polymerize the polycarboxy polymer or copolymer employed in the curable composition of this invention, the phosphorous-terminated polymer/copolymer can act as a phosphorous-containing cure accelerator as defined herein. Specifically, the addition polymer may be formed in the presence of phosphorous-containing chain transfer agents such as, for example, hypophosphorous acid and its salts, as is disclosed in U.S. Pat. No. 5,077,361, which is hereby incorporated herein by reference, so as to incorporate the phosphorous- containing accelerator and the polyacid component in the same molecule.

The polymerization reaction to prepare an addition polymer may also be initiated by various methods known in the art such as, for example, by using the thermal decomposition of an initiator and by using an oxidation-reduction reaction ("redox reaction") to generate free radicals to effect the polymerization.

The phosphorous-containing accelerator may be used at a phosphorous level of from about 1% to about 40%, by weight based on the combined weight of the polycarboxy polymer/copolymer and the polyol. We prefer a level of phosphorous-containing accelerator of from about 2.5% to about 10%, by weight based on the combined weight of the polycarboxy polymer/copolymer and the polyol.

In a preferred embodiment of this invention, the binder composition contains a strong acid. "Strong acid" means a non-carboxylic acid having at least one pKa of no greater than 3. In this embodiment, the copolymer composition preferably contains from 0.01 to 0.2 equivalents of a strong acid, relative to the equivalents of total carboxylic acid, more preferably from 0.01 to 0.18 equivalents. "Total carboxylic acid" means the entire amount of the carboxylic acid present in the copolymer composition. The strong acid may be a mineral acid, such as, for example, sulfuric acid, or an organic acid, such as, for example a sulfonic acid. Mineral acids are preferred.

Preferably, the pH of the composition is less than 3.5, more preferably less than 2.5, which pH will depend, among other things, on the choice of polyol or adjuvants that may be employed, and the strength and amount of any strong acid or base that may be added.

In a preferred embodiment of the invention, the polycarboxy polymer or copolymer has a molecular weight less than 10,000, more preferably less than 5,000, and even more preferably around 3,000 or less, with about 2,000 being advantageous.

In one embodiment of the invention, the composition further contains at least one low molecular weight polybasic carboxylic acid, anhydride or salt thereof having a molecular weight of 1000 or less, preferably 500 or less, and most preferably 200 or less. "Polybasic" means having at least two reactive acid or anhydride functional groups. Examples of suitable low molecular weight polybasic carboxylic acids and anhydrides include, for example, maleic acid, maleic anhydride, fumaric acid, succinic acid, succinic anhydride, sebacic acid, azelaic acid, adipic acid, citric acid, glutaric acid, tartaric acid, itaconic acid, trimellitic acid, hemimellitic acid, trimesic acid, tricarballytic acid, 1,2,3,4-butanetetracarboxylic acid, pyromellitic acid, oligomers of carboxylic acid, and the like. Optionally, the low molecular weight polybasic carboxylic acid, anhydride or salt thereof may be mixed with the hydroxyl-containing compound, under reactive conditions, prior to mixing with the polyacid copolymer.

In one embodiment of the invention, the copolymer composition is a solid composition such as, for example, a powder or a film. The solid composition may be obtained by various methods of drying, such as, for example spray drying, fluidized bed drying, freeze drying, and the like. In a preferred embodiment, the copolymer composition is a curable aqueous composition. "Aqueous" as used herein includes water, and mixtures of water and water-miscible solvents. In this embodiment, the copolymer composition may be in the form of a solution of the copolymer composition in an aqueous medium, such as, for example, in the form of an aqueous dispersion, such as, for example, an emulsion-polymerized dispersion; or in the form of an aqueous suspension.

The polycarboxy polymer or copolymer may be prepared by free radical addition polymerization. In the embodiment of the invention where the composition is in the form of a solid, the copolymer can be prepared, for example, in a hot tube, either in the absence of solvent or with low levels of solvent for reduced viscosity. In other embodiments of the invention, the (co)polymer can be prepared by solution polymerization, emulsion polymerization, or suspension polymerization techniques for polymerizing ethylenically-unsaturated monomers, which are well known in the art. When it is desired to use emulsion polymerization, anionic or nonionic surfactants, or mixtures thereof, can be used. As noted above, the carboxylic acid is polymerized with the reaction product, and the optional ethylenically-unsaturated monomer having a solubility in water of less than 2g/100g water at 25°C, in an in-situ reaction. Therefore, the reaction product is present in the reaction kettle prior to addition of the other monomers. The polymerization can be carried out by various means such as, for example, with all of the monomers added to the reaction kettle prior to beginning the polymerization reaction, with a portion of the optional ethylenically-unsaturated monomer in emulsified form present in the reaction kettle at the beginning of the polymerization reaction, or with a small particle size emulsion polymer seed present in the reaction kettle at the beginning of the polymerization reaction.

The polymerization reaction to prepare the copolymer composition can be initiated by various methods known in the art such as, for example, by using the thermal decomposition of an initiator and by using an oxidation-reduction reaction ("redox reaction") to generate free radicals to effect the polymerization. In another embodiment the copolymer composition can be formed in the presence of phosphorous-containing chain transfer agents such as, for example, hypophosphorous acid and its salts, as is disclosed in U.S. Patents No. 5,077,361 and 5,294,686, so as to incorporate a phosphorous-containing species in the polymer backbone. The copolymer composition can be prepared in solvent/water mixtures such as, for example, i-propanol/water, tetrahydrofuran/water, and dioxane/water.

In certain embodiments, the copolymer composition can include an accelerator. As noted above, the accelerator may be present during the in-situ reaction of the reaction product with the carboxylic acid monomer. Alternatively, the accelerator may be added to the copolymer composition after completion of the in-situ reaction. Examples of suitable accelerators include phosphorous-containing species which can be a phosphorous-containing compound such as, for example, an alkali metal hypophosphite salt, hypophosphorous acid, an alkali metal phosphite, an alkali metal polyphosphate, an alkali metal dihydrogen phosphate, a polyphosphoric acid, and an alkyl phosphinic acid or it can be an oligomer or polymer bearing phosphorous-containing groups such as, for example, an addition polymer of acrylic and/or maleic acid formed in the presence of sodium hypophosphite, addition polymers such as, for example, the copolymer of the present invention prepared from ethylenically-unsaturated monomers in the presence of phosphorous salt chain transfer agents or terminators, and addition polymers containing acid-functional monomer residues such as, for example, copolymerized phosphoethyl methacrylate, and like phosphonic acid esters, and copolymerized vinyl sulfonic acid monomers, and their salts. The phosphorous-containing species can be used at a level of from 0% to 40%, preferably from 0% to 20%, further preferably from 0% to 15%, more preferably from 0% to 10% by weight based on the weight of the copolymer of the invention.

Chain transfer agents such as mercaptans, polymercaptans, and halogen compounds can be used in the polymerization mixture in order to moderate the molecular weight of the (co)polymer composition. Generally, from 0% to 10% by weight, based on the weight of the polymeric binder, of $C_4$- $C_{20}$ alkyl mercaptans, mercaptopropionic acid, or esters of mercaptopropionic acid, can be used.

The carboxyl groups of the (co)polymer composition may be neutralized with a base. The base may be added before, during, or after polymerization of the reaction product with the carboxylic acid to form the copolymer composition. The neutralization may at least partially occur prior to, or while treating a substrate.

In one embodiment of the invention, the carboxyl groups of the copolymer composition may be neutralized with a fixed base, meaning a base which is substantially nonvolatile under the conditions of the treatment such as, for example, sodium hydroxide, potassium hydroxide, sodium carbonate, or t-butylammonium hydroxide. The fixed base must be sufficiently nonvolatile that it will substantially remain in the composition during heating and curing operations.

In a different embodiment of the invention, the carboxy groups may be neutralized with a volatile base, meaning a base which is substantially volatile under the conditions of treatment of the substrate with the copolymer composition. Suitable volatile bases for neutralization include, for example, ammonia or volatile lower alkyl amines. The volatile base can be used in addition to the fixed base. Fixed multivalent bases such as, for example, calcium carbonate can tend to destabilize an aqueous dispersion, if the copolymer composition is used in the form of an aqueous dispersion, but can be used in minor amount.

When the (co)polymer is in the form of an aqueous dispersion or an aqueous suspension and low levels of precrosslinking or gel content are desired, low levels of multi-ethylenically-unsaturated monomers such as, for example, allyl methacrylate, diallyl phthalate, 1,4-butylene glycol dimethacrylate, 1,6-hexanedioldiacrylate, and the like, can be used at a level of from 0.01% to 5 %, by weight based on the weight of copolymer.

When the (co)polymer composition is in the form of an aqueous dispersion, the diameter of the copolymer particles can be from 80 nanometers to 1000 nanometers, as measured using a Brookhaven BI-90 Particle Sizer, which employs a light scattering technique. However, polymodal particle size distributions such as those disclosed in US Patent Nos. 4,384,056 and 4,539,361, hereby incorporated herein by reference, can be employed.

When the (co)polymer composition is in the form of an aqueous dispersion, the copolymer particles can be made up of two or more mutually incompatible copolymers. These mutually incompatible copolymers can be present in various morphological configurations such as, for example, core/shell particles, core/shell particles with shell phases incompletely encapsulating the core, core/shell particles with a multiplicity of cores, interpenetrating network particles, and the like.

In one embodiment of the present invention, a macromolecular organic compound having a hydrophobic cavity is present in the polymerization medium used to form the copolymer composition. Suitable techniques for using a macromolecular organic compound having a hydrophobic cavity are disclosed in, for example, U.S. Patent No. 5,521,266. Macromolecular organic compounds having a hydrophobic cavity useful in the present invention include, for example, cyclodextrin or cyclodextrin derivatives; cyclic oligosaccharides having a hydrophobic cavity such as cycloinulohexose, cycloinuloheptose, or cycloinuloctose; calyxarenes; cavitands; or combinations thereof. Preferably, the macromolecular organic compound is β-cyclodextrin, more preferably methyl-β-cyclodextrin.

In one embodiment of the invention, the binder composition is blended with an emulsion polymer including, as polymerized units, at least one copolymerized ethylenically-unsaturated nonionic acrylic monomer. "Emulsion polymer" means a polymer dispersed in an aqueous medium that has been prepared by emulsion polymerization techniques known in the art. The emulsion polymer used in blending is separate and different from the (co)polymer of the binder of this invention in the case when the (co)polymer is also an emulsion, and may be used in blending with the binder composition of the invention when the (co)polymer is also an emulsion. By "nonionic monomer" herein is meant that the copolymerized monomer residue does not bear any substantial ionic charge between pH=1-14.

The ethylenically-unsaturated nonionic acrylic monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate; hydroxyalkyl(meth)acrylate monomers such as 2-hydroxyethyl methacrylate, 2-hydroxyethyl acrylate, 2-hydroxypropyl methacrylate, 1-methyl-2-hydroxyethyl methacrylate, 2-hydroxy-propyl acrylate, 1-methyl-2-hydroxyethyl acrylate, 2-hydroxybutyl methacrylate and 2-hydroxybutyl acrylate. Other ethylenically-unsaturated nonionic monomers which may be incorporated into the polymer include vinylaromatic compounds, such as styrene, α-methylstyrene, p-methylstyrene, ethylvinylbenzene, vinylnaphthalene, vinylxylenes, vinyltoluenes, and the like; vinyl acetate, vinyl butyrate and other vinyl esters; vinyl monomers such as vinyl alcohol, vinyl chloride, vinyl toluene, vinyl benzophenone, and vinylidene chloride.

Further ethylenically-unsaturated nonionic acrylic monomers include acrylamides and alkyl-substituted acrylamides, such as acrylamide, methacrylamide, N-tert-butylacrylamide and N- methyl(meth)acrylamide; hydroxyl-substituted acrylamides, such as methylolacrylamide, and beta-hydroxyalkylamides.

The emulsion polymer used in blending with the binder of this invention may contain monoethylenically-unsaturated acid monomer, such as, for example, acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate, phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate.

The emulsion polymer used in blending with the binder of this invention may contain copolymerized multi-ethylenically-unsaturated monomers such as, for example, allyl methacrylate, diallyl phthalate, 1,4-butylene glycol dimethacrylate, 1,2-ethylene glycol dimethacrylate, 1,6-hexanediol diacrylate, butadiene, and divinyl benzene.

In a further embodiment of the invention, the emulsion polymer used in blending with the binder of this invention is a predominately hydrophobic emulsion polymer including, as polymerized units, greater than 30%, preferably greater than 40%, more preferably greater than 50%, and even more preferably greater than 60%, by weight, based on the weight of the emulsion polymer solids, of an ethylenically-unsaturated acrylic monomer including a $C_5$ or greater alkyl group. "Acrylic monomer including a $C_5$ or greater alkyl group" means an acrylic monomer bearing an aliphatic alkyl group having five or more C atoms, the alkyl group including n-alkyl, s-alkyl, i-alkyl, and t-alkyl groups. Suitable ethylenically-unsaturated monomers including a $C_5$ or greater alkyl group include ($C_5$-$C_{30}$) alkyl esters of (meth)acrylic acid, such as amyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate; unsaturated vinyl esters of (meth)acrylic acid such as those derived from fatty acids and fatty alcohols; surfactant monomers including long chain alkoxy- or alkylphenoxy(polyalkylene oxide) (meth)acrylates, such as $C_{18}H_{37}$-(ethylene oxide)$_{20}$ methacrylate and $C_{12}H_{25}$-(ethylene oxide)$_{23}$ methacrylate; N-alkyl substituted (meth)acrylamides such as octyl acrylamide; and the like. The monomer including a $C_5$ or greater alkyl group can also contain functionality, such as amido, aldehyde, ureido, polyether and the like, but preferably does not contain an acid or hydroxy group. Emulsion polymers containing such monomers can be prepared by emulsion polymerization, preferably by the method for forming polymers of U.S. Patent No. 5,521,266. A surfactant may be added to the emulsion polymer before or during the blending of the emulsion polymer with the copolymer composition. Preferably, the surfactant is added in the amount of from 0.5% to 20%, preferably from 2% to 10%, by weight, based on the weight of emulsion polymer solids. Preferred is a surfactant having a HLB value of greater than 15.

The predominately hydrophobic emulsion polymer can also include, as copolymerized units, from 0% to 10%, preferably from 0% to 5%, by wt based on the weight of the emulsion polymer solids, monomer bearing a carboxylic acid group, anhydride group, or salt thereof or hydroxyl-group, such as (meth)acrylic acid and hydroxyethyl(meth)acrylate. The emulsion polymer may be present in an amount of from 1% to 10%, preferably from 1.5% to 5%, by weight based on the weight of the copolymer composition, on a solids basis.

The composition of this invention can contain, in addition, conventional treatment components such as, for example, emulsifiers; pigments; fillers or extenders; anti-migration aids; curing agents; coalescents; surfactants, particularly nonionic surfactants; spreading agents; mineral oil dust suppressing agents; biocides; plasticizers; organosilanes; antifoaming agents such as dimethicones, silicone oils and ethoxylated nonionics; corrosion inhibitors, particularly corrosion inhibitors effective at pH<4 such as thioureas, oxalates, and chromates; colorants; antistatic agents; lubricants; waxes; anti-oxidants; coupling agents such as silanes, particularly SilquestTM A-187 (manufactured by GE Silicones--OSi Specialties, located in Wilton CT); Wetlink Silanes from GE (e.g Wetlink 78), and Dynasylan™ silanes from Degussa particularly, epoxy silanes such as but not limited to Dynasylan™ GLYMO and GLYEO. And oligomeric silanes such as HYDROSIL™. Also, polymers not of the present invention; and waterproofing agents such as silicones and emulsion polymers, particularly hydrophobic emulsion polymers containing, as copolymerized units, greater than 30% by weight, based on the weight of the emulsion polymer solids, ethylenically-unsaturated acrylic monomer containing a C5 or greater alkyl group.

The composition of this invention is preferably formaldehyde-free. "Formaldehyde-free" means that the composition is substantially free from formaldehyde, nor does it liberate substantial formaldehyde as a result of drying and/or curing. To minimize the formaldehyde content of the copolymer composition it is preferred, when preparing a polymer of the present invention, to use polymerization adjuncts such as, for example, initiators, reducing agents, chain transfer agents, biocides, surfactants, and the like, which are themselves free from formaldehyde, do not generate formaldehyde during the polymerization process, and do not generate or emit formaldehyde during the treatment of a substrate. "Substantially free from formaldehyde" means that when low levels of formaldehyde are acceptable in the waterborne composition or when compelling reasons exist for using adjuncts which generate or emit formaldehyde, substantially formaldehyde-free waterborne compositions can be used.

The composition of this invention may be used for treating various substrates. Such treatments can be commonly described as, for example, coating, sizing, saturating, bonding, combinations thereof, and the like. Typical substrates include wood, including, for example, solid wood, wood particles, fibers, chips, flour, pulp, and flakes; metal; plastic; fibers such as polyester, glass fibers; woven and non-woven fabrics; and the like and their composite fibers. The copolymer composition can be applied to a substrate by conventional techniques such as, for example, air or airless spraying, padding, saturating, roll coating, foam coating, curtain coating, beater deposition, coagulation, or the like.

In one embodiment of this invention, the composition can be used as a binder for heat-resistant non-woven fabrics such as, for example, non-wovens which contain heat-resistant fibers such as, for example, aramid fibers, ceramic fibers, metal fibers, carbon fibers, polyimide fibers, certain polyester fibers, rayon fibers, rock wool, and glass fibers. "Heat-resistant fibers" mean fibers which are substantially unaffected by exposure to temperatures above 125°C. Heat-resistant non-wovens can also contain fibers which are not in themselves heat-resistant such as, for example, certain polyester fibers, rayon fibers, nylon fibers, and super-absorbent fibers, in so far as they do not materially adversely affect the performance of the substrate.

Non-woven fabrics are composed of fibers which can be consolidated by purely mechanical means such as, for example, by entanglement caused by needle-punching, by an air-laid process, and by a wet-laid process; by chemical means such as, for example, treatment with a polymeric binder; or by a combination of mechanical and chemical means before, during, or after non-woven fabric formation. Some non-woven fabrics are used at temperatures substantially higher than ambient temperature such as, for example, glass fiber-containing non-woven fabrics which are impregnated with a hot asphaltic composition pursuant to making roofing shingles or roll roofing material. When a non-woven fabric is contacted with a hot asphaltic composition at temperatures of from 150°C to 250°C, the non-woven fabric can sag, shrink, or otherwise become distorted. Therefore, non-woven fabrics which incorporate a copolymer composition should substantially retain the properties contributed by the cured aqueous composition such as, for example, tensile strength. In addition, the cured composition should not substantially detract from essential non-woven fabric characteristics, as would be the case, for example, if the cured composition were too rigid or brittle or became sticky under processing conditions.

The copolymer aqueous composition, after it is applied to a substrate, is heated to effect drying and curing. The duration and temperature of heating will affect the rate of drying, processability, handleability; and property development of the treated substrate. Heat treatment at from 120 °C to 400 °C for a period of time between from 3 seconds to 15 minutes can be carried out; treatment at from 175 °C to 225 °C. is preferred. "Curing" means a chemical or morphological change which is sufficient to alter the properties of the polymer such as, for example, via covalent chemical reaction, ionic interaction or clustering, improved adhesion to the substrate, phase transformation or inversion, hydrogen bonding, and the like. The drying and curing functions can be performed in two or more distinct steps, if desired. For example, the composition can be first heated at a temperature and for a time sufficient to substantially dry but not to substantially cure the composition, and then heated for a second time at a higher temperature and/or for a longer period of time to effect curing. Such a procedure, referred to as "B-staging," can be used to provide binder-treated nonwoven, for example, in roll form, which can at a later stage be cured, with or without forming or molding into a particular configuration, concurrent with the curing process.

The heat-resistant non-wovens can be used for applications such as, for example, insulation batts or rolls, as reinforcing mat for roofing or flooring applications, as roving, as microglass-based substrate for printed circuit boards or battery separators, as filter stock, as tape stock, and as reinforcement scrim in cementitious and non-cementitious coatings for masonry, in ceiling tiles, cellulosic roofing tiles, window treatments, wall coverings, molded parts, for curly pulp modification, for powder coating, and the like.

Example 1

This polymer produced with this procedure is used in the examples below. To a three liter four-neck flask equipped with a mechanical stirrer, a condenser, a nitrogen sweep, a thermometer and inlets for the gradual additions of monomer, initiator and sodium hypophosphite solutions, was added 710 grams of deionized water. A chain regulator stock solution was prepared by dissolving 2500 grams of sodium hypophosphite monohydrate in 3056 grams of deionized water. A total of 486.4 g was removed form the stock solution and half (243.2) of this solution was added to the water charge and heated to 93° C. The remaining half of the chain regulator solution was used as co-feed solution. A monomer charge of 1216 grams of glacial acrylic acid was prepared. An initiator solution was prepared by dissolving 12.16 grams of sodium persulfate in 30.7 grams of DI water.

The acrylic acid, sodium persulfate and sodium hypophosphite charges were added linearly and separately over two hours to the stirring water charge. Temperature was maintained at 93°±1°C.

The resultant polymer solution was allowed to cool to room temperature and diluted with 274 grams of deionized water. The solution had a solids content of 52.71%, pH of 3.2, viscosity of 210 centipoises and residual monomer content of less than 0.01%. The number average (Mn) molecular weight by GPC was 660.

The following samples in Table 1B-D illustrate compositions of this invention.

TABLE 1

Sample Formulations

| Sample | Polymer | Acid (g) | TEA[1] (g) | Urea (g) | SHP[2] (g) | H$_2$SO$_4$[3] (g) | Water (g) |
|--------|---------|----------|---------|----------|---------|------------|-----------|
| A | Example 1 | 96.4 | 19.7 | 0 | 5.4 | 6.7 | 21:8 |
| B | Example 1 | 94.7 | 17.7 | 15 | 4.9 | 6 | 11.7 |
| C | Example 1 | 84.2 | 15.7 | 30 | 4.3 | 5.4 | 10.4 |
| D | Example 1 | 73.6 | 13.8 | 47.3 | 3.8 | 4.7 | 6.8 |

[1] >99% solids
[2] 45% solids
[3] 93% solids

Aqueous curable composition samples A-D were evaluated for wet and dry tensile strength as follows. Glass microfiber filter paper sheets (20.3 x.25.4 cm, Cat No. 1820 866, Whatman International Ltd., Maidstone, England) were dipped in each sample binder composition and run through a roll padder with roll pressures of 10 lbs. The coated sheets were then heated at 90°C for 90 seconds in a Mathis oven. Post drying weight was determined to calculate binder add-on (dry binder weight as a percentage of filter paper weight). Dried sheets were then cured in a Mathis oven at specified times and temperatures.

The cured sheets were cut into 1 inch (cross machine direction) by 4 inch (machine direction) strips and tested for tensile strength in the machine direction in a Thwing-Albert Intelect 500 tensile tester. The fixture gap was 2 inches and the pull rate was 2 inches/minute. Strips were tested either "as is" (dry tensile) or immediately after a 30 minute soak in water at 85.degree. C. Tensile strengths were recorded as the peak force measured during parting (Table 1). Data reported are averages of 7 test strips for each binder composition tested.

**Table 1**

| | Tensile strength (Mpa) | |
|--------|------|------|
| **Sample** | **dry** | **wet** |
| **A** | 34.7 | 17.2 |
| **B (10% Urea)** | 30.4 | 18.8 |
| **C (20 % Urea)** | 26 | 19.6 |

Wet tensile strength of a curable composition-treated glass microfiber filter paper which is a substantial fraction of dry tensile strength of a similarly treated glass microfiber filter paper indicates that a composition has cured, and that useful high temperature performance of the cured aqueous composition-treated glass microfiber filter paper results. Samples B-D of this invention cured at 210°C exhibit comparable cured properties (wet tensile strengths) relative to Comparative Sample A (without urea), also cured at 210.degree. C.

As to viscosity, data in Table 2 show that viscosity can be considerably reduced by adding urea. This means that urea can lower viscosity to make the binder more sprayable onto a substrate. Viscosity was measured according to the Brookfield method, ASTM D2196-68. Specifically, viscosity was measured using a low sheer Brookfield LVDT rheometer. Formulation samples were prepared at 50% weight solids and allowed to equilibrate to room temperature prior to testing (22°C ± 1°C). Each sample was measured using spindle #2 at 100 rpm. Viscosity in centipoise was recorded once the reading stabilized.

Table 2

| Sample | A (no urea) | B (10% Urea) | C (20% Urea) | D (30% Urea) |
|--------|-------------|--------------|--------------|--------------|
| **Viscosity (cP)** | 103.8 | 91 | 64.5 | 47.1 |

When we measure total solids by weight, we used the ASTM D-2369 method as follows.
Procedure:

1. Weigh aluminum dish to the 4th decimal place. Record this weight.
2. Weigh out appropriately 0.5 grams of sample and record weight of dish and sample to the 4th decimal place. Note sample should be distributed over dish surface: a few drops of water can be used to aid in distributing the sample. Determination should be done in duplicate.
Place sample in 150°C oven for 30 minutes.
3. Remove sample from oven wearing leather gloves or with tongs and allow to cool to room temperature in CTR, approximately 2 minutes.
4. Weigh and record aluminum dish and polymer to the 4th decimal place.
5. Use equations below to determine % Solids:

Before Drying

weight of dish and sample- weight of dish

weight of sample

After Drying

weight of dish and polymer- weight of dish

weight of polymer

$$\% \text{ Solids} = 100 \text{ x (weight polymer)/(weight sample)}$$

Formaldehyde-free thermosetting resin systems have been developed that either use diethanolamine or ethanol amine as the polyol crosslinker or utilize polyol crosslinkers that contain residual diethanolamine (DEA) or ethanol amine (EA). As typically supplied and used in the industry, triethanolamine contains a low level of approximately 1.5% DEA and 0.1% EA; Unfortunately, DEA is environmentally unfriendly at certain levels, and can be a skin irritant. Urea is very reactive with ethanolamine (EA) or diethanolamine (DEA) and as such has a potentially sallutory effect of acting as a reactive scavenger for ethanolamine and diethanolamine in the formaldehyde-free thermosetting resin. In such a formulation, urea can react with the diethanolamine or ethanol amine as to produce hydroxyureas which can then crosslink into the binder system reducing the already low levels of free diethanolamine or ethanolamine.

**Claims**

1.   A curable composition comprising:

at least one polyol;
at least one polycarboxy polymer or copolymer; and
urea in an amount from 5 to 25 % by weight of the total solids in the composition,
wherein the ratio of equivalents of the carboxy groups in the polycarboxy polymer or copolymer to the hydroxy groups in the polyol is from 1.0/.01 to 1/3.

2.   The composition of claim 1 wherein urea comprises 10-20% by weight of the total solids in the composition.

3.   The composition of claim 1, wherein said ratio is froml/0.02 to 1/1.

4.   The composition of claim 1, wherein said ratio is from 1/.2 to 1/.8

5.   The composition of claim 1 further comprising an emulsion polymer.

6.   The composition of claim 1 wherein the polycarboxy polymer or copolymer a weight average molecular weight of no greater than 10,000.

7. The composition of claim 1 wherein the polycarboxy polymer or copolymer a weight average molecular weight of no greater than 5,000

8. The composition of claim 1 wherein the polycarboxy polymer or copolymer a weight average molecular weight of no greater than 3,000

**European Patent Office**

## EUROPEAN SEARCH REPORT

Application Number

EP 07 25 2237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 763 524 A (ARKENS CHARLES THOMAS [US] ET AL) 9 June 1998 (1998-06-09)<br>* claim 1 *<br>* column 4, lines 21-31 *<br>* column 6, lines 15-27 *<br>* example 16 * | 1-8 | INV.<br>C08F8/14<br>C08K5/053<br>C08K5/21<br>C08L33/02<br>C08L33/06<br>D04H1/64 |
| D,A | US 2005/038193 A1 (BLANKENSHIP ROBERT MITCHELL [US] ET AL) 17 February 2005 (2005-02-17)<br>* claims 1,3,4 *<br>* paragraphs [0004], [0005], [0018] - [0020], [0024], [0025], [0029], [0030], [0033], [0036] - [0038], [0054]; table 4.2 * | 1-8 | |
| D,A | US 2005/192390 A1 (DOBROWOLSKI RICHARD [US] ET AL) 1 September 2005 (2005-09-01)<br>* paragraphs [0001], [0006], [0015], [0016], [0024]; claim 1 * | 1-8 | |
| A | US 2005/048212 A1 (CLAMEN GUY [FR] ET AL) 3 March 2005 (2005-03-03)<br>* paragraphs [0001], [0019], [0027], [0030], [0033], [0037], [0038], [0040], [0043]; claims 1,4-6 * | 1-8 | TECHNICAL FIELDS SEARCHED (IPC)<br><br>C08F<br>C08K<br>C08L<br>D04H |
| A | SU 1 310 368 A1 (MAKAROV BORIS V; ANDREEV VALERIJ G) 15 May 1987 (1987-05-15)<br>* abstract * | 1-8 | |

The present search report has been drawn up for all claims

| Place of search | Date of completion of the search | Examiner |
|---|---|---|
| Munich | 5 September 2007 | Dury, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 2237

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2007

| Patent document cited in search report | | Publication date | Patent family member(s) | | Publication date |
|---|---|---|---|---|---|
| US 5763524 | A | 09-06-1998 | AT | 160597 T | 15-12-1997 |
| | | | AU | 667921 B2 | 18-04-1996 |
| | | | AU | 4212793 A | 28-04-1994 |
| | | | BR | 9303315 A | 22-03-1994 |
| | | | CA | 2101450 A1 | 07-02-1994 |
| | | | CN | 1083844 A | 16-03-1994 |
| | | | CZ | 9301592 A3 | 16-03-1994 |
| | | | DE | 69315393 D1 | 08-01-1998 |
| | | | DE | 69315393 T2 | 30-04-1998 |
| | | | DK | 583086 T3 | 02-02-1998 |
| | | | EP | 0583086 A1 | 16-02-1994 |
| | | | ES | 2109441 T3 | 16-01-1998 |
| | | | FI | 933473 A | 07-02-1994 |
| | | | GR | 3026182 T3 | 29-05-1998 |
| | | | HK | 1001096 A1 | 22-05-1998 |
| | | | HU | 66516 A2 | 28-12-1994 |
| | | | IL | 106446 A | 30-09-1997 |
| | | | JP | 3215233 B2 | 02-10-2001 |
| | | | JP | 6184285 A | 05-07-1994 |
| | | | MX | 9304685 A1 | 31-03-1994 |
| | | | NZ | 248215 A | 26-09-1995 |
| | | | SK | 82993 A3 | 06-04-1994 |
| US 2005038193 | A1 | 17-02-2005 | US | 2006127674 A1 | 15-06-2006 |
| US 2005192390 | A1 | 01-09-2005 | NONE | | |
| US 2005048212 | A1 | 03-03-2005 | AU | 2004201002 A1 | 17-03-2005 |
| | | | BR | 0400918 A | 24-05-2005 |
| | | | CN | 1590494 A | 09-03-2005 |
| | | | JP | 2005068399 A | 17-03-2005 |
| SU 1310368 | A1 | 15-05-1987 | NONE | | |

EPO FORM P0459

For more details about this annex : see Official Journal of the European Patent Office, No. 12/82

**EP 1 865 004 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020188055 A
- US 4076917 A
- US 20050038193 A
- US 5077361 A
- US 5294686 A
- US 4384056 A
- US 4539361 A
- US 5521266 A